# EUROPEAN PATENT APPLICATION

(11) **EP 2 120 308 A2**
(43) Date of publication of application: **18.11.2009**
(21) Application number: 09251321.7
(22) Date of filing: 14.05.2009
(51) Int. Cl.: H02J 7/00

(54) **A charging Device**

(30) Priority: 14.05.2008 GB 0808697
(71) Applicant: Delia Strand, Horton Kirby Dartford DA4 9JG (GB)
(72) Inventor: Delia Strand, Horton Kirby Dartford DA4 9JG (GB)
(74) Representative: Harrison, Paul Richard

(57) **Abstract**

A device (10) is disclosed enabling a plurality of electrically powered particles, deriving power from a battery to be simultaneously recharged. The device has a housing (12) defining inlet ports (11).

An article to be recharged is connected to the device (10) by means of a wire and a jack (16), which jack (16) engages a contact element (83) within the inlet port (11) to form an electrical connection.

The contact element (834) is connected to the mains supply with a transformer stepping down the voltage received by the article and also converting an AC voltage to DC. Each inlet port (11) is connected to a different transformer enabling different articles requiring different voltages to be charged at the same time. Additionally each transformer can be adjustable to allow an inlet port to serve different devices if required.

## Description

### Field of the Invention

The present invention relates to a device for use in recharging the batteries of electrical articles. In particular, the device is for use in charging the electrical energy storage devices in a plurality of articles simultaneously and is especially suitable for portable articles.

### Background to the Invention

With an increasingly mobile population, decreasing costs for certain formerly expensive electrical goods, and improvements in rechargeable batteries, the number of rechargeable articles, is increasing rapidly. Mobile 'phones' personal computers, cameras etc. are becoming ever more widespread and with the increase comes a requirement to recharge the batteries contained within the articles, which batteries allow the articles to be carried and used in situations where no mains electricity supply is available.

When purchasing such an article, the buyer is often also provided with a transformer or similar such device enabling the article to be connected to the mains supply. In this case, the transformer normally includes a rectifier or similarly functioning element to convert the alternating current (AC) mains supply to direct current (DC).

As such therefore, the user often accumulates a large number of transformers of differing size and connectivity.

This brings with it a number of difficulties. The first difficulty is that should more than one device require charging at the same time, a situation exacerbated in a household having many members, the number of sockets available may not be sufficient. Secondly, the transformers quite easily become misplaced and it is often difficult to determine which transformer belongs with which device. Finally, the wires of the transformers become very easily tangled and damaged.

In order to try and simplify the situation, transformers have been devised which are capable of being used for a number of different devices consecutively, whereby the voltage step within the transformer can be changed in stepwise fashion. Such transformers are however only capable of enabling one device at a time to be recharged

### Summary of the Invention

According to a first aspect of the invention, there is provided a recharging device, the recharging device comprising a housing, said housing being formed of a durable, non-electrically conducting material such as a plastics material, the housing defining a plurality of inlet ports enabling an electronic device to be connected and a battery of said electronic device to be recharged;
an electrical connection enabling the recharging device to be connected to a mains supply;
each inlet port being separately operably connected by a linkage means to the electrical connection. The recharging device therefore enables more than one electronic device to be connected for charging at any one time.

Preferably each linkage means includes a transformer to change the output voltage of supply to an electronic device. Yet further preferably, the output voltage is adjustable enabling a port to be used for different electronic devices on different occasions as required.

Optionally, the recharging device includes a replaceable cable having at a first end a jack connectable to an outlet port and having at a second end a connection member, connectable to an electronic device enabling the electronic device to be connected for recharging and also enabling an inlet port to be used for different electronic devices as required.

A cable is conveniently housed, at least partially within a winding device allowing the length of cable lying loose to be reduced and thereby increasing the safety of the product.

The linkage means is conveniently printed at least partially on a circuit board to facilitate manufacture of the device and of replacement therefor.

A recharging device preferably includes a status indicator, for example a light emitting diode (LED) to indicate its operational status.

Optionally, the recharging device includes a retaining means to hold the cables when not in use.

### Brief Description of the Drawings

The invention will now be described with reference to the accompanying drawings which show by way of example only, one embodiment of a recharging device. In the drawings;
Figure 1 is a front view of a recharging device;
Figure 2 is a top view of a recharging device;
Figure 3 is a bottom view of a recharging device;
Figure 4 is a side view of a recharging device;
Figure 5 is a back view of a recharging device;
Figure 6 is a front perspective view of a recharging device;
Figure 7 is a rear perspective view of a recharging device;
Figure 8 shows the constituent parts of the device in exploded view;
Figure 9 is a perspective view of an extension element;
Figure 10 shows a status indicator;
Figure 11 illustrates coupling of the device with an item to be charged;
Figures 12a, 12b illustrate use of the device; and
Figures 13a, 13b illustrate incorporation of the device within a room.

### Detailed Description of the Invention

The requirement of being able to charge the battery, or on occasions run an electronic device from a mains AC supply is increasing year on year with the introduction of more devices which can run on a battery supply contained within the device. This is partially due to the improvement in battery technology which allows longer lasting, lighter and more powerful batteries to be made, but also to the reduction in power usage of already existing products. Moreover a new class of products are continually being introduced into the market which run on battery power.

Typically, a device includes a recharging unit on purchase, which recharging unit is separable from the device and does not need to be carried round by the user in order for the device to function. The recharging unit is normally retained in a home or an office where it can be conveniently used. However, as the number of electronic devices increases, the number of recharging devices also increases.

This leads to problems when more than one device needs to be charged at the same time, while readily storing and retrieving a recharging device and of maintaining the recharging devices free from entanglement.

To address the above difficulties, the present invention enables a plurality of electronic devices to be charged simultaneously. Moreover, means are provided for allowing different devices to be accommodated by the same recharging device. The number of recharging devices is thereby reduced. Further, where cables are used, these tend to be of a shorter length than conventional recharging devices and, in one embodiment, means are provided within the recharging device to store cables safely and relatively compactly.

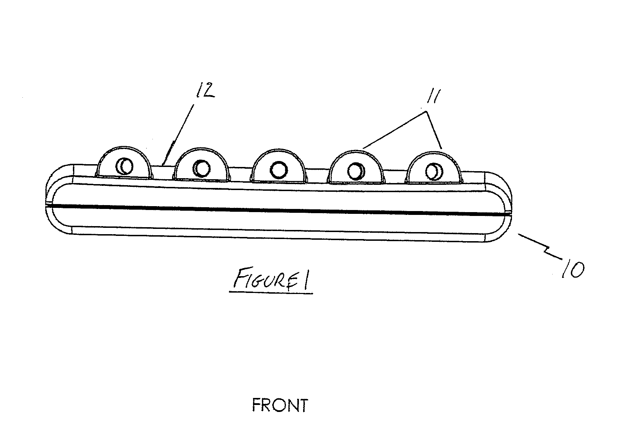

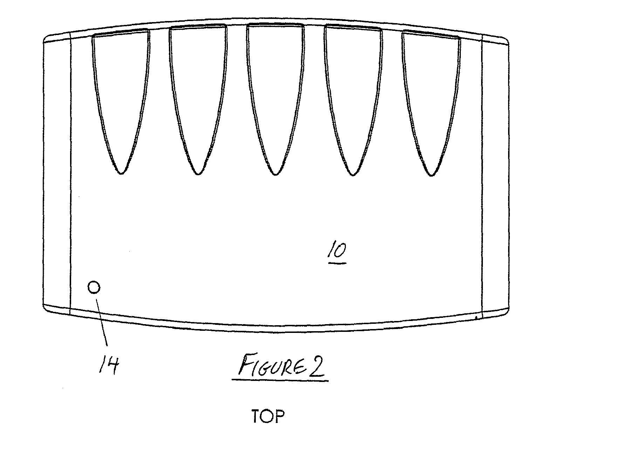

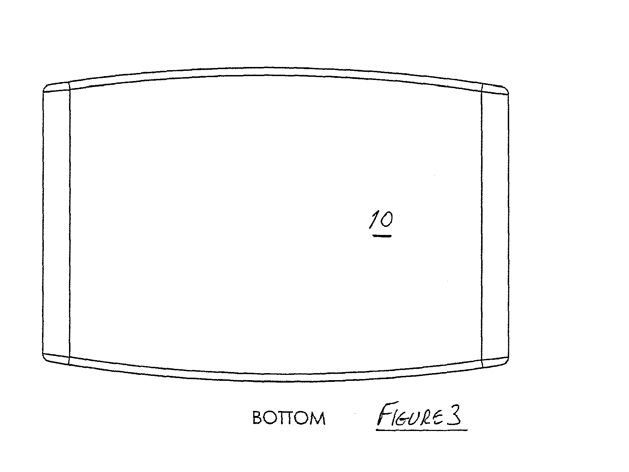

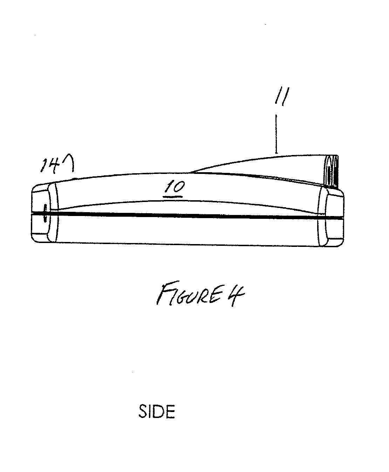

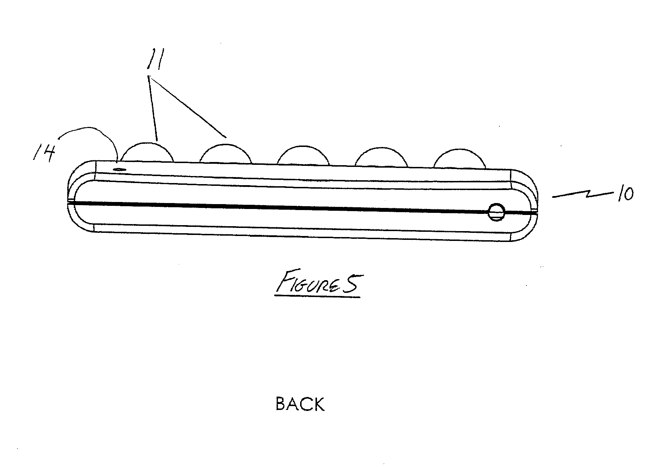

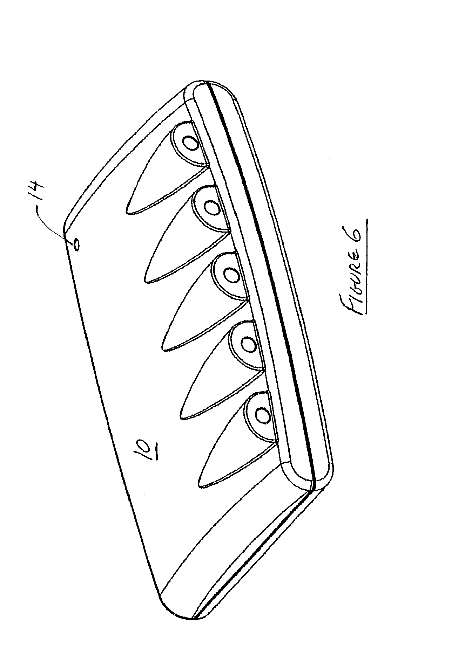

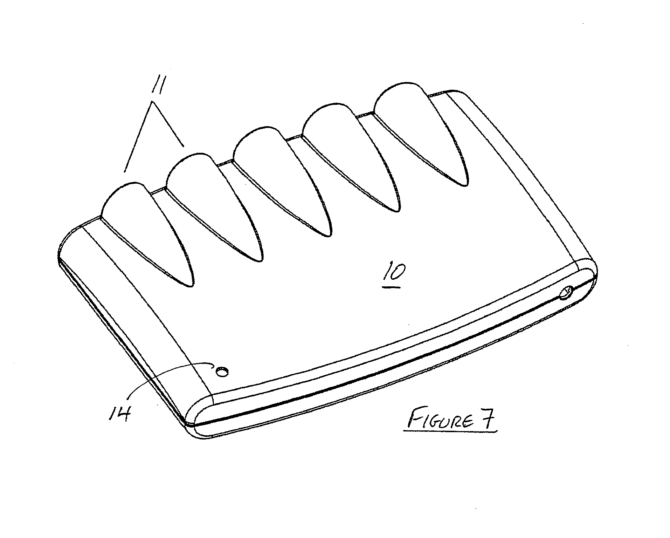

Referring initially to Figures 1-7, a recharging device, generally referenced 10 is formed of a durable plastics material, for example high density polypropylene. In front of the device 10, five inlet ports 11 are defined in a housing 12 enabling an electronic device to be connected to each inlet port. It will be recognised that the number of ports included in the device 10 need not be five but can be set at any reasonable desired number. The inlet ports 11 are intended primarily to retain a standard metal-ended jack and as such, the interior aperture of each port 11 is lined with a metal contact (not illustrated) to ensure a good electric contact and so enable charge flow.

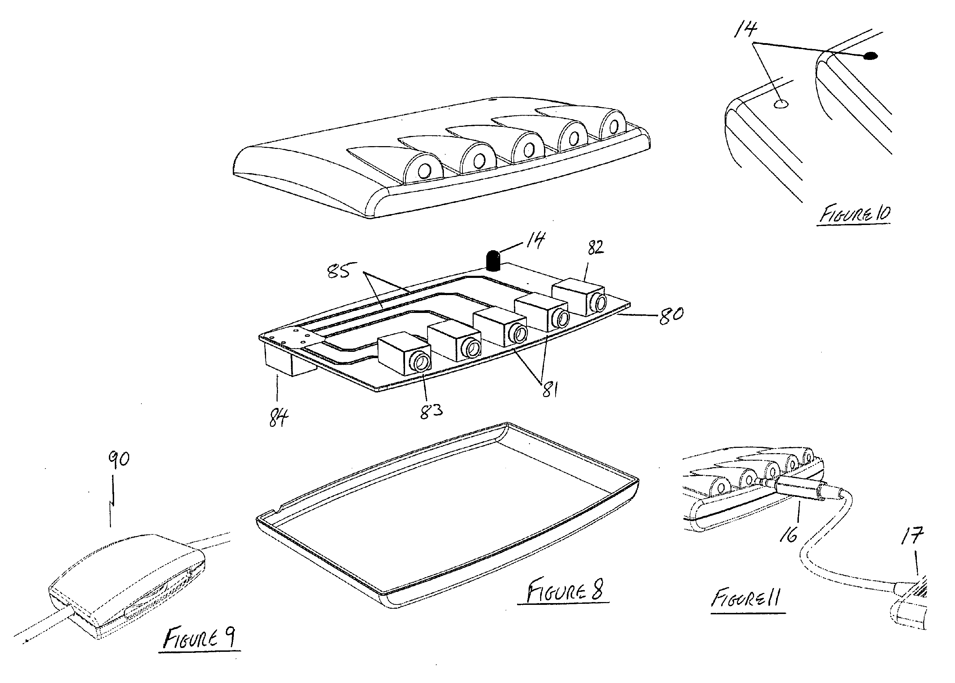

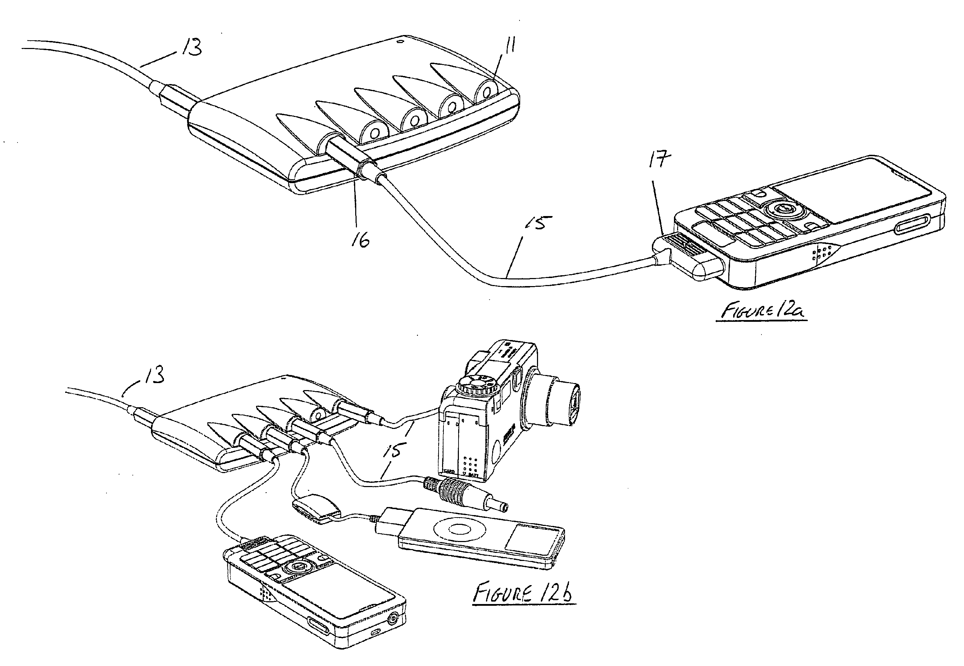

In order for current to be available, a mains port 11 is included to allow the device 10 to be connected to the mains supply. A cable 13 for such a connection is shown in Figures 12a and 12b. To improve the safety of the device 10 an LED indicator 14 on the upper outer casing of the device is active when the device 10 is live and available to supply current. This is illustrated in Figure 10 which shows said activation. Connection between the recharging device 10 and the electronic device is through a cable 15. The cable 15 has at a first end a jack 16 which is connectively fittable within a port 11 to form an electric connection. At the second end of the cable 15 is a further connection 17, compatible with the electronic device. In practise a series of cables can be retained for each particular electronic device. An alternative is to have a universal connector at the second end of the cable to receive a connection 17. This alternative would reduce the amount of cable which needs to be stored.

When required therefore, the electronic device to be charged is matched with a connection 17. The jack 16 at the other end of the cable 15 is inserted (see Figure 11) into a suitable inlet port 11. The device 10 is connected to the mains electricity supply, the user confirming that the supply is on by checking that the LED indicator 14 is active. Charging of the electronic device then takes place in the conventional way. On completion of the charging, the electronic device is disconnected, the jack 16 removed from the device 10 and, if no other electronic devices are being charged by the device 10, the mains supply to the device 10 is switched off.

The connections within the device 10 can be seen in the view provided in Figure 8. In this Figure, the details are shown in the, central, control board section 80. Located along one edge of the board section 80 are the jack ports 81 corresponding to the ports 11. Each jack port 81, includes a housing 82 formed from a non-electrically conducting material such as a conventional plastic. The housing 82 retains a conductive metal contact element 83 to engage a jack 16 and form an electrically conducting contact therewith.

The mains supply enters the device 10 through the distributor block 84, and this supply is distributed through to each contact element 83 by conducting strips or wires 85. To ensure that the device 10 is suitable for a plurality of electronic devices, a transformer element(not illustrated) is provided along each contact strip 85. By providing different strips 85 with transformers which transform to a different voltage, then it is ensured that not only a plurality of electronic devices can be charged but also different types of electronic devices. Where convenient the conducting strips or wires 85 can be printed onto a circuit board to reduce space requirements and ease of replacement. Optionally the voltage step of a transformer element is adjustable, with regard to the voltage provided, in order to improve the flexibility of the device 10 to be adapted to charge a number of electronic devices.

A further feature of the device 10 is the inclusion of a winder 90 shown in Figure 9. The winder 90 includes a winding member about which cable can be wound, when the device is not used. This ensures that the free length of cable 15 is kept to a minimum thereby reducing the trip and entanglement hazards associated with lengths of cable.

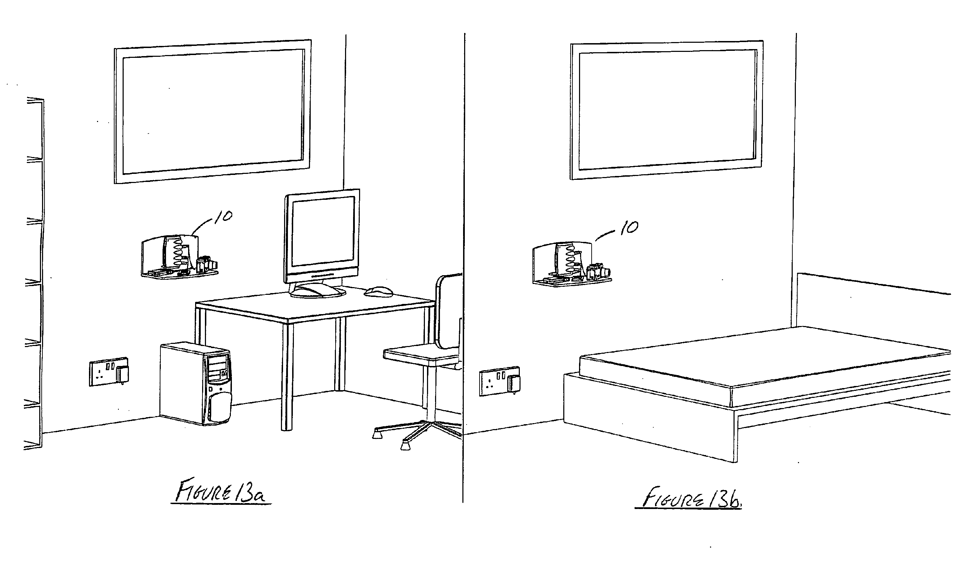

As described above therefore, the recharging device 10 provides a convenient and compact means of recharging electronic devices and, as illustrated in Figures 13a, 13b can be easily accommodated in a number of different rooms in a building.

It will of course be understood that the invention is not limited to the specific details described herein, which are given by way of example only, and that various modifications and alterations are possible within the scope of the invention.

## Claims

1. A recharging device (10), the recharging device (10) comprising a housing (12), said housing (12) being formed of a durable, non-electrically conducting material such as a plastics material, the housing (12) defining a plurality of inlet ports (11) enabling an electronic device to be connected and a battery of said electronic device to be recharged;
an electrical connection enabling the recharging device to be connected to a mains supply;
each inlet port (11) being separately operably connected by a linkage means (85) to the electrical connection.

2. A device according to Claim 1 each linkage means (85) includes a transformer to change the output voltage of supply to an electronic device.

3. A device according to Claim 2, the output voltage of the or each transformer is adjustable.

4. A device according to any preceding claim, wherein the device includes a replaceable cable (15) having at a first end a jack (16) connectable to an outlet port (81), the cable (15) having at a second end a connection member (17), connectable to an electronic device.

5. A device according to any preceding claim, wherein the or each cable (15) is housed, at least partially within a winding device (90), said winding device (90) including a winding member about which a cable (15) is sound.

6. A device according to any preceding claim, wherein the linkage means (85) is printed at least partially on a circuit board.

7. A device according to any preceding claim, wherein the device includes a status indicator (14), to indicate its operational status.

8. A device according to Claim 7 wherein the status indicator is a light emitting diode.

9. A device according to Claim 8 wherein the device includes a retaining means to hold the cables when not in use.
